# EUROPEAN PATENT APPLICATION

(11) **EP 4 484 068 A1**
(43) Date of publication of application: **01.01.2025**
(21) Application number: 23181458.3
(22) Date of filing: 26.06.2023
(51) Int. Cl.: B25F 5/00, B25C 1/00, F16B 15/08

(54) **TOOL AND CONSUMABLE**

(71) Applicant: Hilti Aktiengesellschaft, 9494 Schaan (LI)
(72) Inventor: Roth, Peter, 9472 Grabs (CH); Martinon, Gilles, 9473 Gams (CH)
(74) Representative: Hilti Aktiengesellschaft Corporate Intellectual Property

(57) **Abstract**

Disclosed is a tool (10) that comprises a receptacle (44) configured to temporarily receive a consumable (110), and a feed channel (42) configured to guide consumables (110) into the receptacle (44). The tool (10) further has a probe (46) to detect a position of a projection (140) of the consumable (110). Also disclosed is a consumable (110) configured to be arranged in the feed channel (42) of the tool (10).

## Description

### Background of the Invention

The invention relates to a tool that temporarily holds a consumable within a receptacle. Further, the invention relates to a consumable to be received in such a tool. Tools are known which have a control device for controlling the operation of the tool. The control of the operation is usually done in dependence of switch positions of switches, which are operated for example by a user of the tool, or on the basis of sensor data for example of temperature, pressure, humidity, speed or similar sensors. It may be desirable to further automate or simplify the control of the operation of the tool.

One constraint with a tool using consumables is that most such tools are capable of performing with consumables of different types, e.g. consumables of different size. Selecting an improper consumable may result in increased tool stress, misfunction of the tool, or even a hazard for a user of the tool.

### Brief Summary of the Invention

The above constraints are addressed by a tool comprising a receptacle configured to temporarily receive a consumable, a feed channel configured to guide consumables into the receptacle, and a probe configured to detect a position of a projection of the consumable. In some embodiments, the tool is a handheld tool. In a preferred embodiment, the tool is a driving tool having a driving piston and an actuating device configured to actuate the driving piston such that the driving piston drives a fastening element into a substrate.

According to an embodiment, the tool further comprises a pusher arranged in the feed channel and configured to push the consumable in a transport direction towards the receptacle, wherein the pusher comprises the probe. In a preferred embodiment, the pusher is configured to push the consumable at the projection and to pass by the consumable in the transport direction if the consumable does not have the projection.

The tool according to any of the preceding claims, wherein the probe is configured to generate a signal indicative of the position of the projection of the consumable, and wherein the tool further comprises a controller configured to control an operation of the tool and a signal line configured to transmit the signal from the probe to the controller, wherein the controller is configured to recognize a type of the consumable upon receipt of the signal and to at least one of control the operation of the tool in dependence of the recognized type of the consumable and store the recognized type of the consumable in a data storage. In further embodiments, the controller comprises a microprocessor arranged on an electronic board, such as a control board. In other embodiments, the tool comprises the data storage. Alternatively or additionally, the controller stores the recognized type of the consumable in an external data storage.

In a preferred embodiment, the controller is configured to operate the tool at reduced power or to prevent or abort operation of the tool if the type of the consumable is not recognized. In another preferred embodiment, the tool further comprises an output device configured to output the recognized type of the consumable and/or a number of consumables left, a depletion state or a replenishment request. The output device may comprise at least one of a display, a LED, a buzzer, and a wireless transmitter, such as Bluetooth, NFC, infrared, WLAN, Wi-Fi, GPS, and a data storage readable by an external device. The outputted information may be sent to a user of the tool or a manufacturer or retailer of the tool or to a database server, such as a cloud server.

The above constraints are further addressed by a consumable configured to be arranged in a feed channel of a tool as described above and to be pushed in a transport direction, wherein the consumable comprises a projection indicative of a type of the consumable and projecting in a direction inclined to the transport direction. According to an embodiment, the projection projects in a direction perpendicular to the transport direction.

In a preferred embodiment, the consumable comprises a fastening element such as a screw, a nail, a bolt, a rivet, a clip or a pin, or an energy carrier such as a gas, liquid or solid state propellant, or a cartridge filled with an energy carrier, or a drill, diamond core drill, chisel, or saw blade. In another preferred embodiment, the consumable further has a container or collation element such as a paper or plastic strip comprising the projection. The projection may be made of a different material than a remainder of the container or collation element. In particular, the projection may be made of a plastic material, wherein the container or collation element comprises a paper strip.

### Brief Description of the Several Views of the Drawing

Further aspects and advantages of the fastening tool, associated parts and a method of use thereof will become apparent from the ensuing description that is given by way of example only and with reference to the accompanying drawings in which:
- Fig. 1: illustrates a side view of a driving device,
- Fig. 2: illustrates a side view of the driving device with opened housing,
- Fig. 3: illustrates a manufacturing of a consumable,
- Fig. 4: illustrates a consumable in a tool,
- Fig. 5: illustrates a tool and a consumable,
- Fig. 6: illustrates a tool and a consumable,
- Fig. 7: illustrates a consumbable and a probe,
- Fig. 8: illustrates a consumable,
- Fig. 9: illustrates a consumable,
- Fig. 10: illustrates several embodiments of a consumable, and
- Fig. 11: illustrates several embodiments of a consumable.

### Detailed Description of the Invention

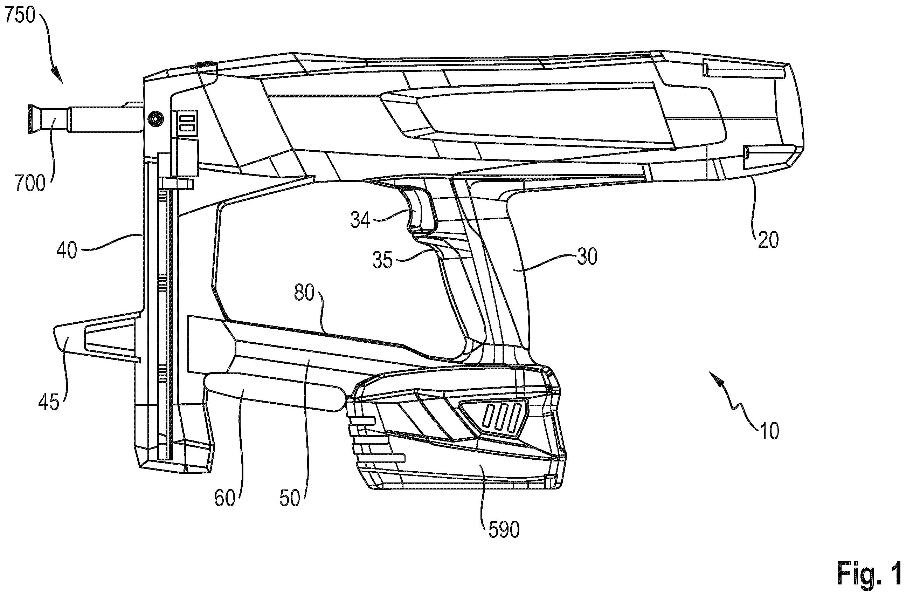

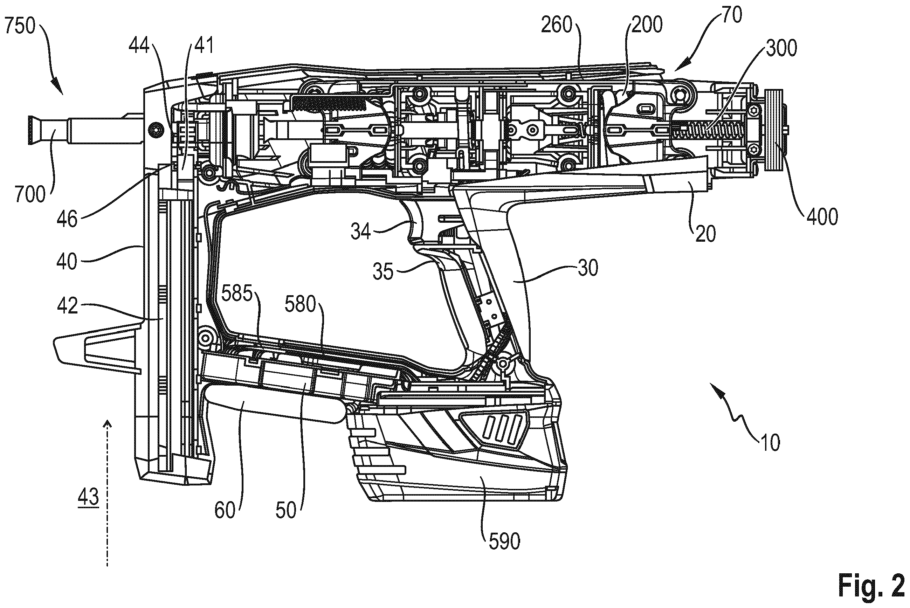

Fig. 1 shows a tool, or driving tool 10 for driving a fastening element, e.g. a nail or bolt, into a substrate in a side view. The driving tool 10 has a driving piston for driving a fastening element into a substrate, and a housing 20 accommodating the driving piston and an actuating device for actuating the driving piston. The driving tool 10 is a handheld tool and has a grip 30, a magazine 40 and a bridge 50 connecting the grip 30 to the magazine 40. A scaffold hook 60 for hanging the driving tool 10 on a scaffold or the like, a controller 580, signal lines 585 and an electrical battery 590 are fastened to the bridge 50. A trigger 34 and a hand switch 35 are arranged on the grip 30. The driving tool 10 further has a guide channel 700 for guiding the fastening element and a press-on probe 750 for detecting a pressing the driving tool 10 on the substrate. The guide channel 700 comprises a feed channel (not shown) for manually feeding single fastening elements, such as nails, into a receptacle (shown in Fig. 2). An alignment of the driving tool 10 perpendicular to a surface of the substrate is supported by a support element 45.

Fig. 2 shows the driving tool 10 with opened housing 20. An actuating device 70 for actuating the driving piston is accommodated in the housing 20. The actuating device 70 comprises an electric motor for converting electrical energy from the electrical battery 590 into rotational energy, a transmission 400 for transferring a torque of the electric motor to a spindle drive 300, a roll train 260 for transmitting a force from the spindle drive 300 to a spring 200 and for transmitting a force from the spring 200 to the driving piston.

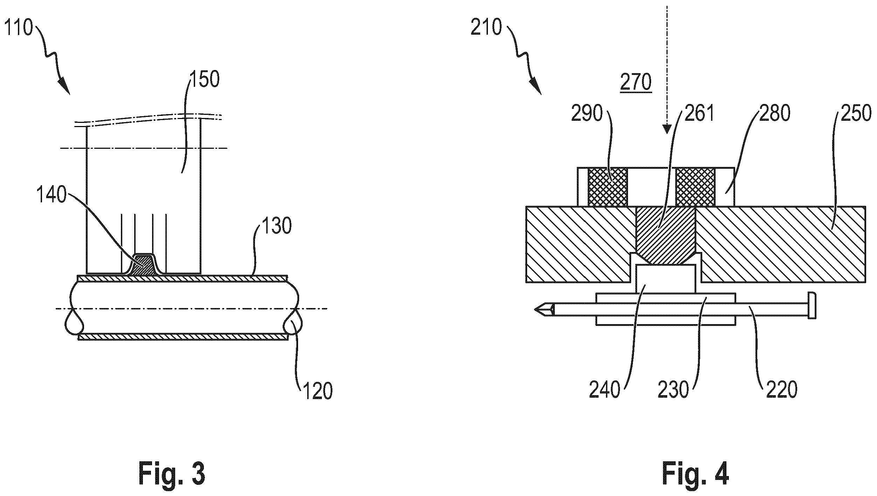

The magazine 40 comprises a feed channel 42 that opens into a receptacle 44 which is configured to temporarily receive a fastening element fed through the feed channel 42 and guided by the feed channel 42 into the receptacle 44. A pusher 41 is arranged in the feed channel 42 to push the fastening elements in a transport direction 43 towards the receptacle 44. The pusher 41 comprises a probe 46 configured to detect a position of a projection of the fastening elements, as further described below with respect to Figs. 4-7. The probe 46 generates a signal indicative of the position of the projection.

The signal is transmitted from the receiver to the controller 580 via the signal lines 585, wherein the controller is configured to recognize a type of the consumable upon receipt of the signal. Further, the driving tool 10 comprises a display 80 to output information about the recognized type of the consumable. As mentioned above, the controller recognizes a type of the consumable upon receipt of the signal from the receiver. To this end, the controller 580 comprises a microprocessor arranged on a control board.

The controller 580 is further configured to control an operation of the driving tool 10. In particular, the controller 580 automatically adjusts and/or regulates a voltage, an amperage and/or a power of the electric motor, an energy and/or a speed of the driving piston, in dependence of the recognized type of the consumable. The recognized type of the consumable includes a length of the consumable and an application which the consumable is configured to be used for, such as a 15 mm stud to be driven into steel, or a 40 mm nail to be driven into wood. As a precautionary measure, the controller 580 may operate the tool at reduced power or even prevent or abort operation of the tool if it does not recognize the type of the consumable. The controller 580 is further configured to store the recognized type of the consumable in a data storage. The data storage may be arranged on the control board of the controller 580, externally to the controller 580 on the driving tool 10, or externally to the driving tool 10.

Further, the driving tool 10 comprises several output devices, such as the display 80, that output the recognized type of the consumable, a number of consumables left, a depletion state of the magazine 40, and replenishment requests, if applicable. The output devices include, apart from the display 80, a LED for optically displaying the information, a buzzer for acoustically displaying the information, and a wireless transmitter. The wireless transmitter transmits data about the recognized type of the consumable via Bluetooth, NFC, infrared, WLAN, Wi-Fi, and GPS. Alternatively, or additionally, an on-board data storage may be read out by an external device. The outputted information is sent to a user of the tool or a manufacturer or retailer of the tool or to a database server, such as a cloud server. In a preferred embodiment, the replenishment requests are, e.g. after approval by the user, sent to the manufacturer or retailer to automatically refill the stock of the user without the need of a separate user's request. To this end, a number of consumables consumed is monitored by the controller 580 and included in the stored and/or transmitted information.

Fig. 3 shows a consumable 110 during manufacturing. The consumable 110 comprises a fastener 120, such as a nail, and a collation element 130 formed as a paper strip attached, e.g. glued, to the fastener 120. The collation element 130 comprises a projection 140 to indicate a type of the fastener 120 as described above. The projection 140 is made of a different material than a remainder of the collation element 130, e.g. a plastic material, and is formed onto the collation element 130 by a forming tool 150, such as a forming wheel, or moulding roller, which has a profile corresponding to the desired profile of the projection 140.

Fig. 4 shows a consumable 210 in a tool 250. The consumable 210 comprises a fastener 220 and a collation element 230 attached to the fastener 220. The collation element 230 comprises a projection 240 to indicate a type of the fastener 220. The tool 250 comprises a probe 261 to detect a position of the projection 240 on the consumable 210. In particular, the probe 261 is configured to move in a probing direction 270 to detect a position of a surface of the projection 240 relative to the fastener 220, or height of the projection 240. To this end, the probe 261 is movably held in a holder 280. During movement along the probing direction 270 onto the consumable 210, the probe 261 abuts on the projection 240. A position sensor 290 then detects a position of the probe 261 relative to the holder 280, to create a signal indicative of the height of the projection 240.

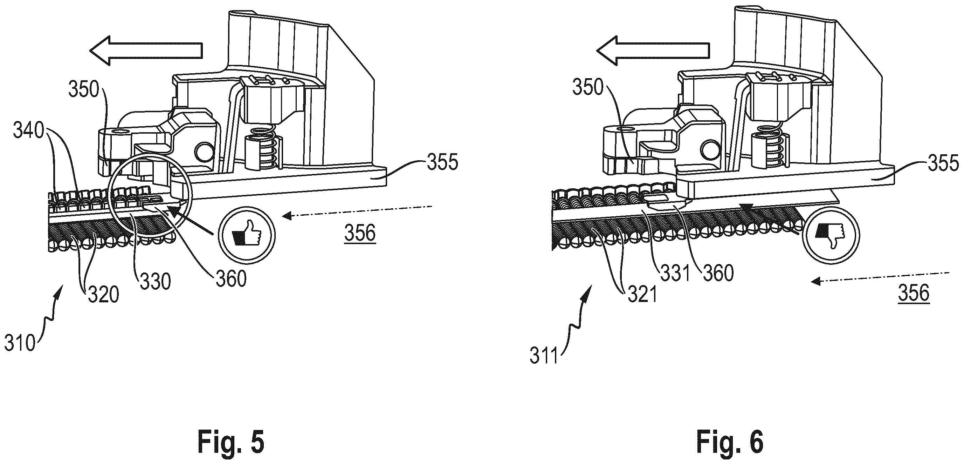

Fig. 5 shows a consumable 310 in a tool 350. The consumable 310 comprises a plurality of fasteners 320 arranged in a row and collated together by a collation element 330 that is attached to the fasteners 320. The collation element 330 comprises a plurality of projections 340 to indicate a type of the fasteners 320. In a feed channel (not shown), the tool 350 comprises a pusher 355 that pushes the fasteners 320 in a transport direction 356 towards a receptacle (not shown). The pusher 355 has a probe 360 to detect a position of the projections 340 on the consumable 310. The pusher 355, or the probe 360, is configured to push the consumable 310 at one of the projections 340. To this end, the probe 360 extends as far into the feed channel as to abut onto the projections 340 in the transport direction 356.

Fig. 6 shows a consumable 311 in the tool 350. The consumable 311 comprises a plurality of fasteners 321 arranged in a row and collated together by a collation element 331 that is attached to the fasteners 321. Unlike the consumable 310 shown in Fig. 5, the collation element 331 does not comprise any projections similar to the projections 340 of the collation element 330. The pusher 355, or the probe 360, thus passes by the consumable 311 in the transport direction 356, and a type of the consumable 311, or the fasteners 321, is not recognized.

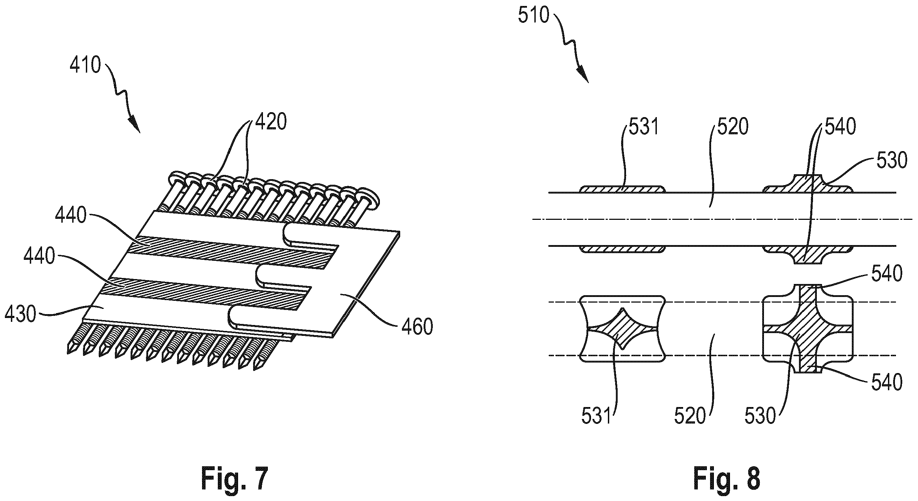

Fig. 7 shows a consumable 410 in a tool having a probe 460. The consumable 410 comprises a plurality of fasteners 420 arranged in a row and collated together by a collation element 430 that is attached to the fasteners 420. The collation element 430 comprises two projections 440 to indicate a type of the fasteners 420. A first type of fasteners may e.g. be indicated by the presence of both projections 440, a second type of fasteners may be indicated by the presence of only one of the projections 440, a third type of fasteners may be indicated by the presence of only the other one of the projections 440 etc. The probe 460 is configured to detect a presence, and thus position of the projections 440 on the consumable 410.

Fig. 8 shows two cross-sectional views of a consumable 510. The consumable 510 comprises a plurality of fasteners 520 and two collation elements 530, 531. The upper view of Fig. 8 shows a cross-section of the consumable 510 at a position of a fastener 520, whereas the lower view of Fig. 8 shows a cross-section of the consumable 510 at a position between two fasteners 520. The collation elements 530, 531 are each formed as a plastic strip attached to, e.g. formed onto, the fasteners 520. The collation element 530 comprises a projection 540 on each side of the consumable to indicate a type of the fasteners 520. The projection 540 is made of the same material as a remainder of the collation element 530, e.g. a plastic material, and may be formed onto the collation element 530 during production thereof. In contrast, the collation element 531 does not comprise any projections similar to the projection 540 of the collation element 530.

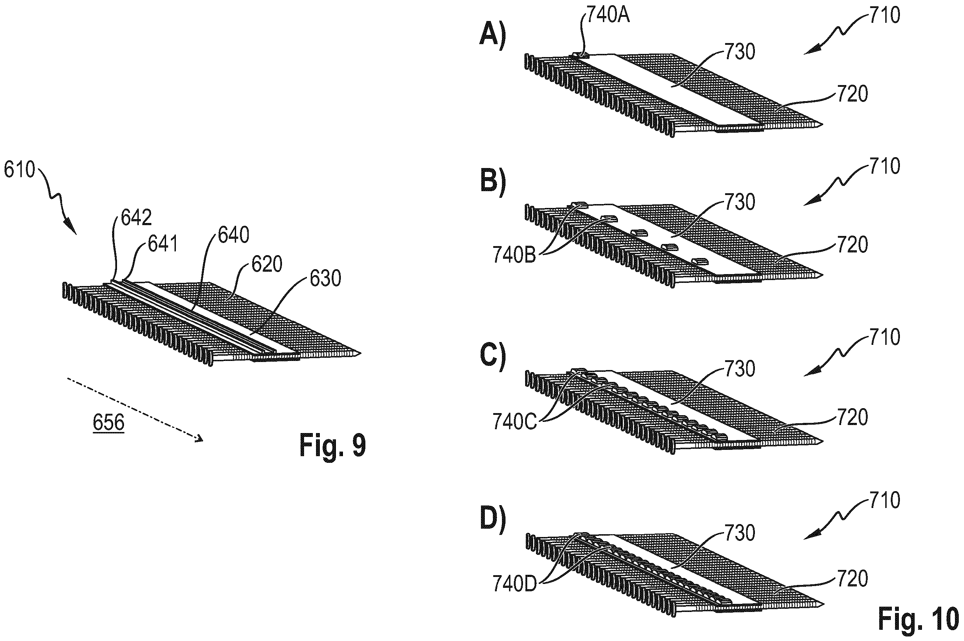

Fig. 9 shows a consumable 610 configured to be transported in a feed channel of a tool (not shown) in a transport direction 656. The consumable 610 comprises a plurality of fasteners 620 arranged in a row oriented in the transport direction 656 and collated together by a collation element 630 that is attached to the fasteners 620. The collation element 630 comprises a projection 640 to indicate a type of the fasteners 620. The projection 640 has two legs 641, 642 and extends in the direction of the row, i.e. the transport direction 656 along the whole consumable 610. The projection 640, or the legs 641, 642, project from the consumable 610, or a remainder of the consumable 610, in a direction perpendicular to the transport direction 656.

Fig. 10 shows several embodiments of a consumable 710 according to the disclosure, each comprising a plurality of fasteners 720 arranged in a row and collated together by a collation element 730 that is attached to the fasteners 720. The collation element 730 of embodiment A) comprises a projection 740A that extends in the direction of the row only along one single fastener 720, in particular the last fastener of the row to be transported into a receptacle of a tool as described above. The collation element 730 of embodiment B) comprises a plurality of projections 740B each extending in the direction of the row only along one single fastener 720. A distance between two adjacent projections 740B corresponds to six fasteners 720 along a lengthwise direction of the row of fasteners 720. The collation element 730 of embodiment C) comprises a plurality of projections 740C each extending in the direction of the row only along one single fastener 720. A distance between two adjacent projections 740C corresponds to two fasteners 720 along a lengthwise direction of the row of fasteners 720. The collation element 730 of embodiment D) comprises a plurality of projections 740D each extending in the direction of the row only along one single fastener 720. One of the projections 740D corresponds each of the fasteners 720.

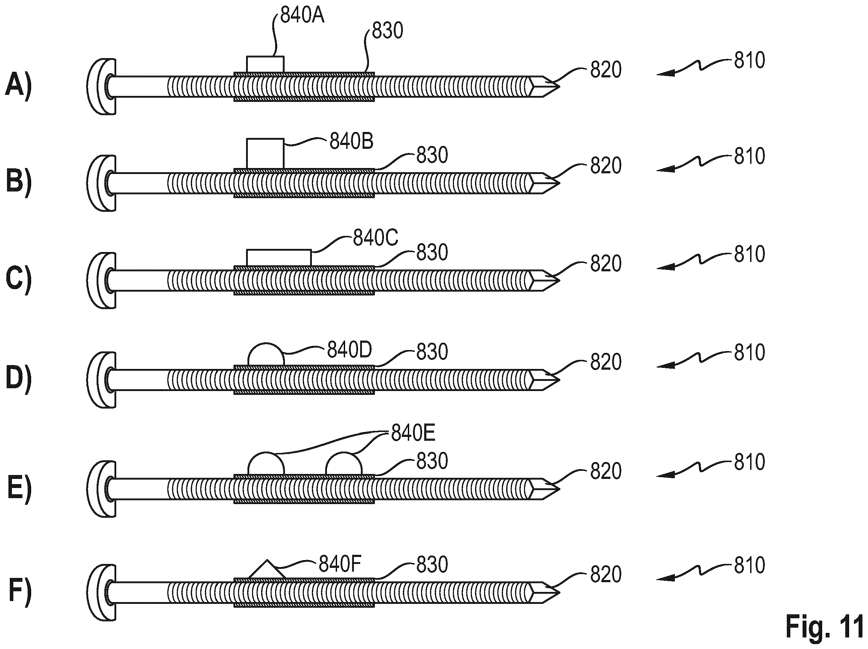

Fig. 11 shows several embodiments of a consumable 810 according to the disclosure, each comprising a fastener 820 and a collation element 830 that is attached to the fastener 820. The collation element 830 of embodiment A) comprises a projection 840A that has a rectangular shape projecting from a remainder of the consumable 810, or collation element 830. The collation element 830 of embodiment B) comprises a projection 840B that has a rectangular shape projecting from a remainder of the consumable 810, or collation element 830, farther than the projection 840A of embodiment A). The collation element 830 of embodiment C) comprises a projection 840C that has a broader rectangular shape than the projection 840A of embodiment A). The collation element 830 of embodiment D) comprises a projection 840D that has a circular shape projecting from a remainder of the consumable 810, or collation element 830. The collation element 830 of embodiment E) comprises two projections 840E having a circular shape. The collation element 830 of embodiment F) comprises a projection 840F that has a triangular shape projecting from a remainder of the consumable 810, or collation element 830.

In general, a type of the consumable may be indicated by a position, shape, size, or number of the projections or a combination thereof. The projection may enhance guiding the consumable in the feed channel. Further, if the projection is arranged on one side of the consumable only, or on both sides in an asymmetric way, inserting the consumable into the feed channel in the wrong way may be prevented.

The foregoing exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. All features of any of the described embodiments may be applied in any combination to any of the other embodiments, unless in contradiction to each other. It is intended that the scope of the invention be defined by the claims appended hereto and their equivalents.

## Claims

1. A tool comprising a receptacle configured to temporarily receive a consumable, a feed channel configured to guide consumables into the receptacle, and a probe configured to detect a position of a projection of the consumable.

2. The tool according to claim 1, wherein the tool further comprises a pusher arranged in the feed channel and configured to push the consumable in a transport direction towards the receptacle, wherein the pusher comprises the probe.

3. The tool according to claim 2, wherein the pusher is configured to push the consumable at the projection and to pass by the consumable in the transport direction if the consumable does not have the projection.

4. The tool according to any of the preceding claims, wherein the probe is configured to generate a signal indicative of the position of the projection of the consumable, and wherein the tool further comprises a controller configured to control an operation of the tool and a signal line configured to transmit the signal from the probe to the controller, wherein the controller is configured to recognize a type of the consumable upon receipt of the signal and to at least one of control the operation of the tool in dependence of the recognized type of the consumable and store the recognized type of the consumable in a data storage.

5. The tool according to claim 4, wherein the controller is configured to operate the tool at reduced power or to prevent or abort operation of the tool if the type of the consumable is not recognized.

6. The tool according to any of claims 4 to 5, further comprising an output device configured to output the recognized type of the consumable.

7. The tool according to claim 6, wherein the output device comprises at least one of a display, a LED, a buzzer, and a wireless transmitter.

8. The tool according to any of the preceding claims, wherein the tool is a driving tool having a driving piston and an actuating device configured to actuate the driving piston such that the driving piston drives a fastening element into a substrate.

9. A consumable configured to be arranged in a feed channel of a tool according to any of the preceding claims and to be pushed in a transport direction, wherein the consumable comprises a projection indicative of a type of the consumable and projecting in a direction inclined to the transport direction.

10. The consumable according to claim 9, wherein the projection projects in a direction perpendicular to the transport direction.

11. The consumable according to any of claims 9 to 10, comprising a fastening element or an energy carrier.

12. The consumable according to any of claims 9 to 11, further having a container or collation element comprising the projection.

13. The consumable according to claim 12, wherein the projection is made of a different material than a remainder of the container or collation element.

14. The consumable according to any of claims 12 to 13, wherein the container or collation element comprises a paper strip.

15. The consumable according to any of claims 9 to 14, wherein the projection is made of a plastic material.
